Europäisches Patentamt

European Patent Office

Office européen des brevets

(11) Publication number: **0 184 339**
**B1**

(12) **EUROPEAN PATENT SPECIFICATION**

(45) Date of publication of patent specification: **14.03.90**

(51) Int. Cl.⁵: **B 60 L 3/06**

(21) Application number: **85308162.8**

(22) Date of filing: **08.11.85**

(54) Electrically propelled railway vehicle.

(30) Priority: **08.11.84 JP 234148/84**

(43) Date of publication of application:
**11.06.86 Bulletin 86/24**

(45) Publication of the grant of the patent:
**14.03.90 Bulletin 90/11**

(84) Designated Contracting States:
**DE FR GB**

(56) References cited:
**EP-A-0 137 263**
**US-A-4 327 391**

**PATENT ABSTRACTS OF JAPAN (M-76), 17th
November 1976, page 1499 M 76; & JP - A - 51
132 521 (KOGYO GIJUTSUIN)**

**PATENT ABSTRACTS OF JAPAN (M-76), 21st
October 1976, page 692 M 76; & JP - A - 51 120
516 (KOMATSU SEISAKUSHO K.K.)**

**The file contains technical information
submitted after the application was filed and
not included in this specification**

(73) Proprietor: **MITSUBISHI DENKI KABUSHIKI
KAISHA
2-3, Marunouchi 2-chome Chiyoda-ku
Tokyo 100 (JP)**

(72) Inventor: **Sasaki, Kazuo
2-1-208, Izumi-dai 2-chome Kita-ku
Kobe City Hyogo Prefecture (JP)**

(74) Representative: **Lawson, David Glynne et al
MARKS & CLERK 57-60 Lincoln's Inn Fields
London WC2A 3LS (GB)**

Courier Press, Leamington Spa, England.

# Description

The present invention relates to an electrically propelled railway vehicle according to the preamble of claim 1.

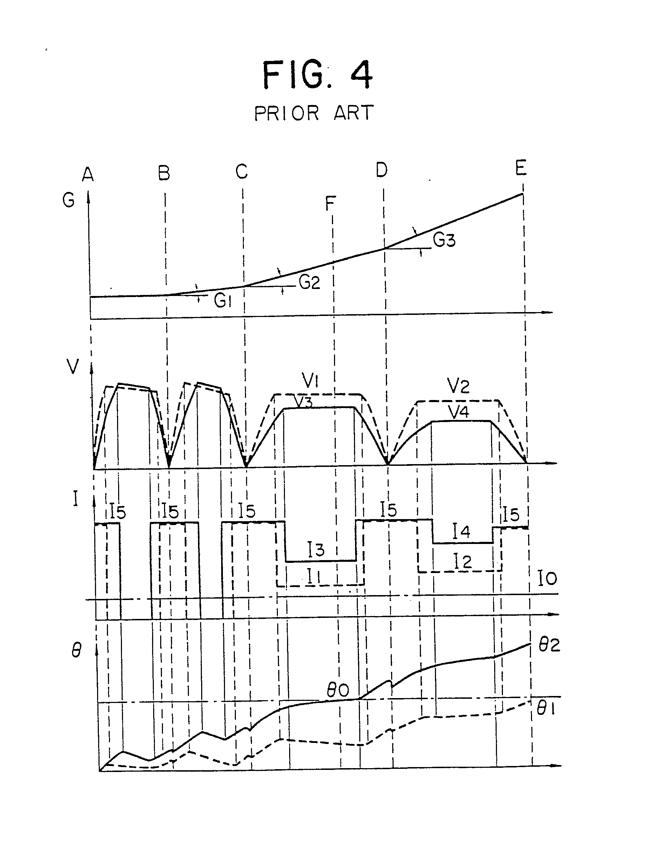

Fig. 3 of the drawings is a block diagram showing a prior-art control equipment of this type. In Fig. 3, numeral 1 designates an operation command receiver, which receives an operation command signal 1A inputted in accordance with a predetermined operation command and outputs its output signal 1a. Numeral 2 designates a motor current receiver, which receives a motor current detection signal 2A of an electric railcar, and outputs its output signal 2a. Numeral 3 designates a control circuit, which receives one of the abovementioned output signals 1a and 2a of two types and outputs a motor current control command signal 3a preset in response to the received signal. Numeral 4 designates a motor current signal converter, which outputs a motor current signal 4a to a motor control circuit 5 of the rear stage thereof and outputs a desired motor current from the motor control circuit 5 on the basis of the abovementioned control command signal 3a. (Cf e.g. JP—A—51/132521).

The operation of the prior-art control equipment of this type will be explained. When the operation command signal 1A is inputted to the operation command receiver 1 in accordance with a predetermined operation command, the operation command receiver 1 inputs the operation command signal 1A and outputs an output signal 1a. This signal 1a is applied to the control circuit 3. This control circuit 3 thus outputs a preset motor current control command signal 3a in response to the output signal 1a. This signal 1a is applied to the motor current signal converter 4. The motor current signal converter 4 thus applies a motor current signal 4a on the basis of the signal 3a to the motor control circuit 5, which thus outputs a predetermined motor current. Further, a motor current detection signal 2A is inputted to the motor current receiver 2 due to the motor current, and the output signal 2a outputted from the receiver 2 in response to the motor current detection signal 2A is applied to the control circuit 3. The motor current control command signal 3a from the control circuit 3 is continuously outputted until the output signal 2a reaches a predetermined value.

The modes of the drive operation of the electric railcar by the prior-art control equipment will be explained with reference to Fig. 4. Fig. 4 is an explanatory view of the modes of the drive operations of the electric railcars by the prior-art control equipment shown in Fig. 3. In Fig. 4, the electric railcar is operated in the sequence of stopping ground points A, B, C, D and E. G denotes the gradient of a route along which the electric railcar travels. The gradient is 0 between the points A and B, the gradient is $G_1$ between the points B and C, the gradient is $G_2$ between the points C and C, and the gradient is $G_3$ between the points D and E. There is a relationship of $0 < G_1 < G_2 < G_3$ among the gradients. In other words, an upward gradient is formed from the point A to the point E. When the electric railcar travels along the route from the point A to the point E, the load of the electric railcar increases in accordance with the gradient travelling resistance. In Fig. 4, V, $V_1$ to $V_4$ denote the travelling speeds of the electric railcar, I, $I_0$ to $I_5$ denote the motor currents, and $\theta$, $\theta_0$ to $\theta_2$ are temperature rising values of devices through which the motor current is flowed.

In Fig. 4, a curve designated by a broken line indicates the state of the case that the electric railcar is operated under a normal load. The electric railcar immediately shifts to a notch-off (idling travel) between the stopping points A and B and between the points B and C after starting and accelerating, operates an electric brake, and the mnotor current I of the value $I_5$ is flowed as designated by a broken line at this time. Then, the gradients are $G_2$ and $G_3$ between the stopping points C and D and between the points D and E, respectively, the railcar continues power drive state, the speed V of the electric railcar is balanced with the value $V_1$ and $V_2$, respectively and the motor current I is flowed at the values $I_1$ and $I_2$, respectively. The temperature rise of the devices, through which the motor current I is flowed becomes the highest temperature rise value $\theta_1$ when the railcar arrives at the ground point E lower than the allowable temperature rising value $\theta_0$ of the device since the value of the motor current I is relatively small, and the device does not become defective.

Then, the curve of a solid line in Fig. 4 indicates the state of the case that the railcar is operated by using a towing capacity as much as possible when the electric railcar is in an overload state. At this time, the flowing time of the motor current I of the value $I_5$ slightly increases when the railcar travels between the points A and b and between the points B and C, but the temperature rising value $\theta$ caused thereby is not so high, and there is a considerable margin up to the allowable temperature rising value $\theta_0$. However, the speed V of the electric railcar is balanced by the values $V_3$ and $V_4$ with respect to the gradients $G_2$ and $G_3$ between the next stopping points C and D and between the points D and E, and the motor current I is flowed at the values $I_3$ and $I_4$. At this time, the values $I_3$ and $I_4$ are relatively high, and the value $I_5$ of the motor current I at the starting and accelerating time is continued for a long period of time. Thus, the temperature rise of the device through which the motor current is flowed is vigorous, thus arrives at the allowable temperature $\theta_0$ at the ground point F, and further rises to the excessively rising value $\theta_2$.

As described above, according to the prior-art control equipment of the electric railcar, the motor current is flowed in the continuously high state when the railcar travels in the overload state. Thus, the temperature rise of the device becomes excessive, causes the lifetime of the device to be shortened due to the thermal deterioration of the insulator used in the device, and in the worst case, a problem that the insulator is burnt out arises.

From US—A—4 327 391, a motor protection circuit is known which disconnects the motor upon excessive energization in terms of current magnitude and exposure time.

Summary of the invention

The present invention has been made in order to eliminate the disadvantages of the prior-art control equipment as mentioned above, and has for its object to provide a control equipment for a railcar in which, when a current flowing time exceeds the allowable limit in case that a motor current becomes excessive due to an overload during the execution of an operation command, the motor current is automatically lowered to a predetermined value, an alarm is generated at the operation command side to alter the content of the operation command, thereby lowering the motor current to a predetermined value or continuing the output state until the motor current is turned OFF.

The control equipment for an electric railcar according to the present invention comprises a current flowing time deciding circuit for counting a time that the motor current of the electric railcar exceeds a predetermined reference value, and an alarm output circuit for generating an alarm on the basis of the output from the current flowing time deciding circuit.

According to the present invention, when the time counted by the current flowing time deciding circuit exceeds the predetermined reference time, a predetermined output signal is generated, the amplitude of the motor current for the electric railcar is altered on the basis of the output signal, and an alarm output circuit is operated.

Brief description of the drawings

Fig. 1 is a block diagram showing a control equipment for an electric railcar according to an embodiment of the present invention;

Fig. 2 is an explanatory view for the current flowing time decision reference in the control equipment of Fig. 1;

Fig. 3 is a block diagram of the prior-art control equipment for an electric railcar; and

Fig. 4 is an explanatory view of the modes of the drive operations of the electric railcar according to the prior-art control equipment of Fig. 3.

Description of the preferred embodiment

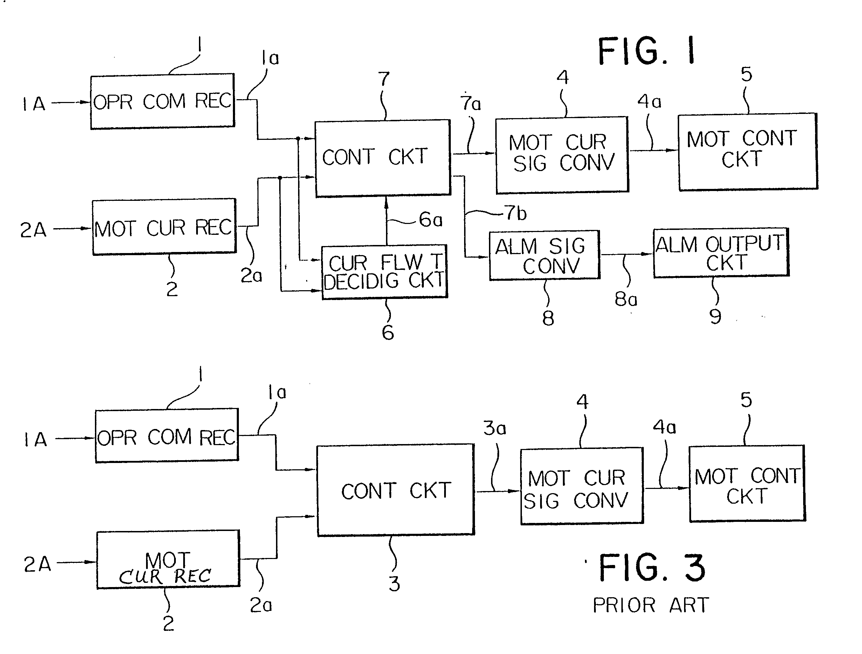

In Fig. 1, a block diagram of a control equipment for an electric railcar according to an embodiment of the present invention is shown. In Fig. 1, the corresponding parts are denoted by the same symbols as those in Fig. 3. Numeral 6 designates a current flowing time deciding circuit, numeral 7 designates a control circuit, and numeral 8 denotes an alarm signal converter. Numeral 9 designates an alarm output circuit. The current flowing time deciding circuit 6 counts a time that the output signal 1a from the operation

command receiver 1 exceeds a reference value while receiving the output signal 1a from the operation command receiver 1, and outputs a decision signal 6a for lowering the motor current to a predetermined value when the counted time exceeds the reference time allowed for the reference current value. The control circuit 7 has different operating modes according to whether the decision signal 6a is inputted or not. (I) When the decision signal 6a is not inputted to the control circuit 7, the control circuit 7 generates a predetermined motor current control signal in response to the application of the output signal 1a from the operation command receiver 1. (II) When the decision signal 6a is inputted to the control circuit 7, the control circuit 7 forcibly alters the motor current control command signal set in response to the signal 1a, generates a motor current control command signal of different level preset in response to the decision signal 6a to the motor current signal converter 4 as a first output signal 7a, and generates a signal for operating an alarm to an alarm signal converter 8 as a second output signal 7b. The alarm signal converter 8 receives the second output signal 7b, outputs an alarm signal 8a. Further, the alarm output circuit 9 receives the alarm signal 8a, and generates a predetermined alarm. The alarm signal 8a is continued until the operation command operated at present is turned OFF or the content of the operation command is altered so that the amplitude of the motor current fails within a predetermined allowable range.

Then, the operation of the control equipment for the electric railcar of the embodiment of the present invention described above will be explained. When the operation command signal 1A is inputted to the operation command receiver 1 in accordance with the predetermined operation command, the operation command receiver 1 receives the operation command signal 1A and outputs the output signal 1a. This signal 1a is applied to the control circuit 7, the control circuit 7 outputs a motor current control command signal 7a preset in response to the output signal, and the signal 7a is applied to the motor current signal converter 4. Thus, the converter 4 applies the motor current signal 4a on the basis of the signal 7a to the motor control circuit 5. The motor control circuit 5 thus outputs a predetermined motor current. The motor current detection signal 2A is inputted to the motor current receiver 2 due to the motor current, and the receiver 2 outputs the output signal 2a in response to the signal 2A to the control circuit 7, thereby providing the motor current output corresponding to the output signal 1a from the receiver 1.

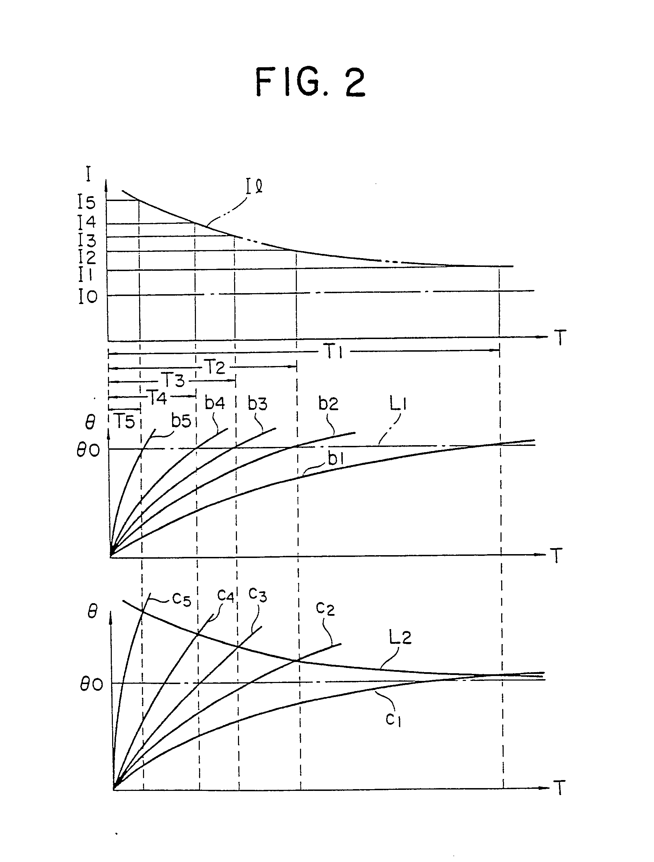

The reference current and the reference time set to the current flowing time deciding circuit 6 will be explained with reference to Fig. 2. Fig. 2 is an explanatory view for the current flowing time decision reference. In Fig. 2, $T$, $T_1$ to $T_5$ designates current flowing times, $I$, $I_0$ to $I_5$ designate motor currents, $I_l$ designates a current flowing time setting curve, $\theta$ designates the temperature rising value of the device, $\theta_0$ designates the highest allowable temperature rising value at the continuous current flowing time, $L_1$ designates the temperature rising value limit line of the case that $\theta$ is the temperature rising limit, and $L_2$ designates the temperature rising curve of the case that the allowable temperature rising at the short time current flowing time is set to a value higher than $\theta_0$. Of the $L_1$ and $L_2$, the $L_1$ is set in the ordinary case, but the $L_2$ is presumed to be set when the allowable temperature is clear for a short time of the device. $I_0$ is the continuous current flowing time allowable current value. The temperature rising limit when the $I_0$ is continued is $\theta_0$. When the $I_1$ is continuously flowed, the temperature rises as the curve $b_1$ or $C_1$, and it reaches the temperature rising limit set by the $L_1$ or $L_2$ within the time $T_1$. Similarly, when the current is continuously flowed at $I_2$ or $I_5$, the temperature rises like the curve $b_2$ to $b_5$ or $C_1$ to $C_5$, and reaches the temperature rising limit in the time $T_2$ to $T_5$. Thus, the relationship between the I and the T is set like the curve $I_i$, the excess of the current flowing time is decided, and the device to be controlled can be used within the range of the allowable temperature rise as long as the flowing current is controlled to be reduced when the excess is decided.

The number of steps of the decisions set by utilizing the relationship between the I and the T can be arbitrarily selected in response to the accuracy of the decision according to whether the accuracy is precise or rough. The degree of the amplitude of the motor current may be set by performing in advance the simulation in accordance with the decision of the current flowing time deciding circuit 6.

According to the present invention as described above, the control equipment for the railcar comprises the current flowing time deciding circuit and the alarm circuit. Thus, the control equipment can decide the current flowing time of the motor current when the motor is used in the overload state, automatically limits the amplitude of the motor current when exceeding the reference value, and generates a suitable operation command together by generating the alarm. Therefore, the control equipment of the invention provides advantages that the performance of the railcar can be acheived to the maximum limit within the allowable temperature rising range for the devices.

## Claims

1. An electrically propelled railway vehicle comprising an electric drive motor, control equipment (1, 2, 4, 6, 7) for the motor, and means (5) for limiting the motor current (I), in which the control equipment comprises means (1) responsive to an operation command (1A) and generating an output signal (1a) representing the required motor current corresponding to the said operation command (1A), and motor control circuitry (7) responsive to the required current signal (1a), and, for preventing motor over-heating under sustained load, a protective circuit (6) responsive to a value (1a; 2a) of the motor current, characterised in that the protective circuit (6) is adapted to determine whether the time duration (T) of the motor current signal (1a; 2a) exceeds a predetermined reference value ($T_1;...; T_5$) corresponding to the magnitude ($I_1;...; I_5$) of the motor current signal (1a; 2a), and the motor control circuitry (7) is responsive to the output signal (6a) of the said protective circuit (6) such that the motor control circuitry (7) provides a motor control signal (7a) corresponding to the required current signal (1a) in the absence of a signal (6a) from the protective circuit (6), and substitutes a motor over-ride control signal (7a) corresponding to a reduced safe continuous current value ($I_0;...; I_4$) in the presence of a signal (6a) from the protective circuit (6).

2. A vehicle as claimed in claim 1, further including means (8, 9) providing an alarm when an output signal (6a) from the protective circuit (6) is present.

3. A vehicle as defined in claim 2, characterised in that when the measured time (T) exceeds a preset reference time ($T_1;...; T_5$), the said protective circuit (6) generates a predetermined output signal (6a), alters the amplitude of the motor current on the basis of the said output signal (6a), and operates said alarm output circuit (9).

4. A vehicle as claimed in claim 1, 2 or 3 in which the protective circuit (6) defines a plurality of said duration reference values ($T_1;...; T_5$) corresponding inversely to respective motor current values ($I_1;...; I_5$).

5. A vehicle as claimed in any preceding claim in which the motor current signal of which the time duration ($T_1;...; T_5$) is determined is the signal (1a) representing the required motor current.

## Patentansprüche

1. Elektrisch angetriebenes Schienenfahrzeug, umfassend einen elektrischen Antriebsmotor, eine Steuereinrichtung (1, 2, 4, 6, 7) für den Motor sowie eine Einrichtung (5) zur Begrenzung des Motorstromes (I), wobei die Steuereinrichtung folgendes aufweist: eine Einrichtung (1), die auf einen Betriebsbefehl (1A) anspricht und ein Ausgangssignal (1a) erzeugt, welches den erforderlichen Motorstrom entsprechend dem Betriebsbefehl (1A) repräsentiert, eine Motorsteuerungsschaltung (7), die auf das Signal (1a) für den erforderlichen Strom anspricht, und, um eine Überhitzung des Motors unter andauernder Last zu verhindern, eine Schutzschaltung (6), die auf einen Wert (1a; 2a) des Motorstromes anspricht, dadurch gekennzeichnet, daß die Schutzschaltung (6) so ausgelegt ist, daß sie bestimmt, ob die Zeitdauer (T) des Motorstromsignals (1a; 2a) einen vorgegebenen Referenzwert (T1;...; T5) überschreitet, der dem Wert (I1;...; I5) des Motorstromsignals (1a; 2a) entspricht, und die Motorsteuerungsschaltung (7) auf das Ausgangssignal (6a) der Schutzschaltung (6) anspricht, so daß die Motorsteuerungsschaltung (7) ein Motorsteuersignal (7a) liefert, das dem Signal (1a) für den erforderlichen Strom in Abwesenheit eines Signals (6a) von der Schutzschaltung (6) entspricht, und ein Motorprioritäts-Steuersignal (7a) ersetzt, welches einem reduzierten sicheren kontinuierlichen Stromwert (I0;...; I4) in Anwesenheit eines Signals (6a) von der Schutzsschaltung (6) entspricht.

2. Fahrzeug nach Anspruch 1, ferner umfassend eine Einrichtung (8, 9), die einen Alarm gibt, wenn ein Ausgangssignal (6a) von der Schutzschaltung (6) vorliegt.

3. Fahrzeug nach Anspruch 2, dadurch gekennzeichnet, daß dann, wenn die gemessene Zeit (T) eine vorgegebene Referenzzeit (T1;...; T5) überschreitet, die Schutzschaltung (6) ein vorgegebenes Ausgangssignal (6a) erzeugt, die Amplitude des Motorsstromes auf der Basis des Ausgangssignals (6a) ändert und die Alarmausgabeschaltung (9) betätigt.

4. Fahrzeug nach Anspruch 1, 2 oder 3, bei dem die Schutzschaltung (6) eine Vielzahl von Zeitdauer-Referenzwerten (T1;...; T5) definiert, die in inverser Weise den jeweiligen Motorstromwerten (I1;...; I5) entsprechen.

5. Fahrzeug nach einem der vorherigen Ansprüche, bei dem das Motorstromsignal, dessen Zeitdauer (T1;...; T5) bestimmt wird, das Signal (1a) ist, welches den erforderlichen Motorstrom repräsentiert.

**Revendications**

1. Véhicule sur rails à propulsion électrique comprenant un moteur électrique d'entraînement, un équipement de commande (1, 2, 4, 6, 7) pour le moteur et un moyen (5) pour limiter le courant moteur (I), où l'équipement de commande comprend un moyen (1) répondant à un ordre de fonctionnement (1A) et produisant un signal de sortie (1a) représentant le courant moteur requis correspondant audit ordre de fonctionnement (1A) et un montage de commande de moteur (7) répondant au signal de courant requis (1a) et pour empêcher une surchauffe du moteur sous une charge entretenue, un circuit de protection (6) répondant à une valeur (1a; 2a) du courant moteur, caractérisé en ce que le circuit de protection (6) est adapté à déterminer si le durée (T) du signal de courant moteur (1a; 2a) dépasse une valeur prédéterminée de référence ($T_1$;...; $T_5$) correspondant à la grandeur ($I_1$;...; $I_5$) du signal de courant moteur (1a; 2a) et le montage de commande de moteur (7) répond au signal de sortie (6a) dudit circuit de protection (6) de manière que le montage de commande de moteur (7) produise un signal de commande de moteur (7a) correspondant au signal de courant requis (1a) en l'absence d'un signal (6a) du circuit de protection (6) et substitue un signal de commande prioritaire de moteur (7a) correspondant à une valeur réduite continue et sûre de courant ($I_0$;...; $I_4$) en présence d'un signal (7) du circuit de protection (6).

2. Véhicule selon la revendication 1, comprenant de plus un moyen (8, 9) produisant une alarme lorsqu'un signal de sortie (6a) du circuit de protection (6) est présent.

3. Véhicule selon la revendication 2, caractérisé en ce que lorsque le temps mesuré (T) dépasse un temps préétabli de référence ($T_1$;...; $T_5$), ledit circuit de protection (6) produit un signal prédéterminé de sortie (6a), altère l'amplitude du courant moteur sur la base dudit signal de sortie (6a) et fait fonctionner ledit circuit de sortie d'alarme (9).

4. Véhicule selon la revendication 1, 2 ou 3, où le circuit de protection (6) définit un certain nombre de valeurs de référence de durée ($T_1$;...; $T_5$) correspondant inversement à des valeurs respectives de courant moteur ($I_1$;...; $I_5$).

5. Véhicule selon toute revendications précédente où le signal de courant moteur dont la durée ($T_1$;...; $T_5$) est déterminée est le signal (1a) représentant le courant moteur requis.

EP 0 184 339 B1

FIG. I

1 → OPR COM REC — 1a

2A → MOT CUR REC — 2a

7 CONT CKT — 7a

7 → MOT CUR SIG CONV — 4a → 5 MOT CONT CKT

6a

6 CUR FLW T DECIDIG CKT — 7b

8 ALM SIG CONV — 8a → ALM OUTPUT CKT 9

FIG. 3

1 → OPR COM REC — 1a

2A → MOT CUR REC — 2a

3 CONT CKT — 3a

4 → MOT CUR SIG CONV — 4a → 5 MOT CONT CKT

PRIOR ART

# FIG. 2

# FIG. 4
### PRIOR ART